(19) Europäisches Patentamt
European Patent Office
Office européen des brevets

(11) Veröffentlichungsnummer : **0 111 747**
**B1**

(12) # EUROPÄISCHE PATENTSCHRIFT

(45) Veröffentlichungstag der Patentschrift : **30.07.86**

(51) Int. Cl.⁴ : **A 01 N 25/14**, A 01 N 57/16 // (A01N57/16, 43:38)

(21) Anmeldenummer : **83111341.0**

(22) Anmeldetag : **12.11.83**

(54) **Lagerstabile, die Wirkstoffe Pyrazophos und Captafol enthaltende, Mittel.**

(30) Priorität : **16.11.82 DE 3242353**

(43) Veröffentlichungstag der Anmeldung : **27.06.84 Patentblatt 84/26**

(45) Bekanntmachung des Hinweises auf die Patenterteilung : **30.07.86 Patentblatt 86/31**

(84) Benannte Vertragsstaaten : **AT BE CH DE FR GB IT LI NL SE**

(56) Entgegenhaltungen :
**CHEMICAL ABSTRACTS, Band 93, Nr. 19, 10. November 1980, Seite 173, Nr. 180824y, Columbus, Ohio, USA E. RASCHE et al.: "Pyrazophos Captafol, a new fungicide combination for combatting serial diseases of wheat"**

(73) Patentinhaber : **HOECHST AKTIENGESELLSCHAFT**
**Postfach 80 03 20**
**D-6230 Frankfurt am Main 80 (DE)**

(72) Erfinder : **Röchling, Hans, Dr.**
**Geierfeld 25**
**D-6232 Bad Soden am Taunus (DE)**

**EP 0 111 747 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind lagerstabile die beiden Wirkstoffe Pyrazophos der Formel I und Captafol der Formel II enthaltende Mittel in Form von Granulat- und Spritzpulverformulierungen.

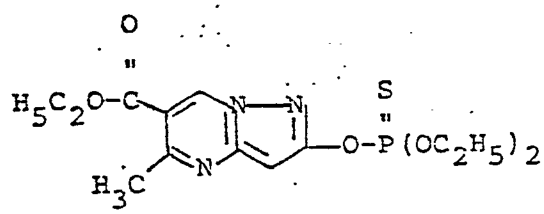

(I)

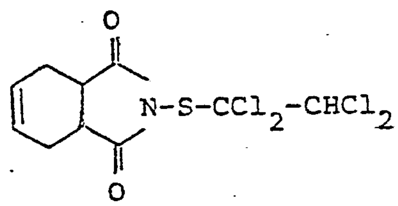

(II)

Die Kombination der beiden Fungizide der Forlmeln I und II ist bekannt. Sie ist im Handel unter dem Namen ®Furesan erhältlich. Die Wirkstoffkombination I und II wird zur Bekämpfung von Ährenkrankheiten, insbesondere zur Kontrolle des Echten Mehltaus (Erysiphe graminis) und der Spelzenbräune (Septoria nodorum) an Winter- und Sommerweizen eingesetzt. Mit dieser Fungizid-Kombination können sowohl präventive als auch gegenüber Mehltau curative Wirkungen erzielt werden. Das Mittel ist an allen Weizensorten sehr gut pflanzenverträglich.

Die Kombination von Pyrazophos und Captafol wird aufgrund der Schwerlöslichkeit von Captafol in fester Form, bisher gewöhnlich als Spritzpulver, formuliert. Bei diesen Formulierungen können jedoch schon nach kurzer Lagerung anwendungstechnische Probleme auftreten.

So werden meist schon nach einwöchiger Lagerung der Formulierungen bei 40 °C flockige Niederschläge in den hieraus zubereiteten wäßrigen Suspensionen beobachtet, d. h. die Schwebefähigkeit der Formulierungen nimmt während der Lagerung stark ab.

Die Schwebefähigkeit ist ein wichtiges Kriterium zur Prüfung der Qualität eines Spritzpulvers oder Granulats. Sie wird definiert als die Menge eines Präparates (in Gewichtsprozenten), die sich nach Ablauf einer Sedimentationszeit von 30 Minuten in den oberen neun Zehntel Volumenteilen einer Suspension befindet.

Parallel mit der Verschlechterung der Schwebefähigkeit von Captafol/Pyrazophos-Formulierungen geht ein Absinken des pH-Wertes. So besitzt die wäßrige Suspension eines frisch hergestellten Captafol/Pyrazophos Spritzpulvers einen pH-Wert von 6,6. Nach einwöchiger Lagerung des Spritzpulvers bei 40 °C beträgt der pH der hieraus hergestellten wäßrigen Suspension lediglich einen Wert von 5,6. Nach einwöchiger Lagerung des Spritzpulvers bei 50 °C sinkt der pH-Wert von 6,6 auf 4,7.

Setzt man Spritzpulver- oder Granulatformulierungen von Pyrazophos und Captafol übliche anorganische Basen wie Natriumhydrogencarbonat hinzu, ändern sich die ungünstigen Lagereigenschaften der Formulierungen nicht. So werden beispielsweise bei Zugabe von 2 Gewichtsprozent Natriumhydrogencarbonat zu einem Spritzpulver nach 3 wöchiger Lagerung bei 50 °C Abscheidungen von Sedimenten beobachtet, wenn dieses in Wasser suspendiert wird. Eine ebenso unzureichende stabilisierende Wirkung läßt sich auch bei Zusatz von anderen üblichen Basen wie Natriumcarbonat, Magnesiumcarbonat, Trinatriumphosphat, Dinatriumhydrogenphosphat, Natriumacetet, Magnesiumoxid, Natriumperborat sowie alkalisch eingestellter Kieselsäure (®Durosil) feststellen. Auch bei Zugabe von 1 : 1 Mischungen der Gemische Natriumperborat/Borsäure und Natriumbicarbonat/Natriumcarbonat kann das Absinken des pH-Wertes und die Ausflockung nach Lagerung der festen Formulierungen nicht verhindert werden.

Es wurde nun überraschenderweise gefunden, daß Magnesiumhydroxidcarbonat eine ausgezeichnete Wirkung zur Stabilisierung von Spritzpulvern und Granulaten der Kombination Pyrazophos und Captafol aufweist.

Der Zusatz von Magnesiumhydroxidcarbonat bewirkt, daß die Pyrazophos/Captafol-Formulierung mindestens 10-12 Wochen bei 50 °C ohne Qualitätseinbuße gelagert werden kann, ohne daß Ausflokkungen bei der Herstellung der Spritzbrühen auftreten.

Die aus den festen Formulierungen hergestellten Spritzbrühen hatten nach dieser Lagerzeit eine Gesamtschwebefähigkeit von 72 bis 95 %.

Gegenstand der vorliegenden Erfindung sind daher fungizide Mittel in Form von Spritzpulvern oder Granulaten auf Basis der Wirkstoffe Pyrazophos und Captafol, dadurch gekennzeichnet, daß sie zwecks Stabilisierung Magnesiumhydroxidcarbonat enthalten.

Die erfindungsgemäßen fungiziden Mittel können insbesondere 2 bis 10 Gew.-%, besonders bevorzugt 2 bis 4 Gew.-% Magnesiumhydroxidcarbonat enthalten.

Das erfindungsgemäß zu verwendende Magnesiumhydroxidcarbonat ist ein basisch gefälltes Magnesiumcarbonat, das im allgemeinen eine außerordentlich feine, voluminöse Struktur besitzt. Es wird auch als « Magnesiumcarbonat Superleicht » bezeichnet.

Der Wirkstoffgehalt der erfindungsgemäßen Mittel kann bezüglich des Wirkstoffs Pyrazophos zwischen 5 und 25 Gew.-%, insbesondere zwischen 12 und 17 Gew.-% sowie bezüglich des Wirkstoffs Captafol zwischen 25 und 60 Gew.-%, insbesondere zwischen 30 und 48 Gew.-% variieren.

Das Gewichtsverhältnis Pyrazophos zu Captafol kann im Bereich von 1 : 12 bis 1 : 1, insbesondere zwischen 1 : 4 bis 1 : 1,5 variieren.

Als Formulierungshilfsmittel werden neben Magnesiumhydroxidcarbonat übliche, dem Fachmann geläufige Netz-, Dispergier- und Haftmittel sowie Inertmaterialien und übliche Lösungsmittel eingesetzt.

Es können als Netzmittel beispielsweise Natriumsalze von Alkylnaphthalinsulfonsäuren, Natrium-Oleoylmethyltauride, Natriumsalze von aliphatischen Sulfonsäuren, iso-Tridekanolpolyglykoläther, als Dispergiermittel beispielsweise Methoxylignin-sulfonsaures Natrium, Calciumsalze von Ligninsulfonsäuren, Kresol-Formaldehyd Kondensationsprodukte oder Kondensationsprodukte aus Naphthalinsulfonsäuren und Formaldehyd, als Haftmittel acylgruppenhaltige Polyvinylalkohole oder Cumaron-Indenharze und als Inertmaterial vorzugsweise synthetisch gefällte Kieselsäure, Kaoline oder Omya-Kreide, verwendet werden. Als Lösungsmittel kommen insbesondere hochsiedende aromatische Lösungsmittel (Siedebereich 200-250 °C) infrage.

Im Falle der Granulate finden zusätzlich folgende Formulierungshilfsmittel bevorzugt Anwendung : als Dispergiermittel das Na-Salz einer ungesättigten Dicarbosäure, copolymerisiert mit einem aliphatischen Dien (®Sopropon-T36) sowie Tristyrylphenol, das oxäthyliert und phosphoryliert und mit Triethanolamin neutralisiert ist (®Soprophor FL) ; als Klebemittel Mono- und Polysacharide wie Glukose oder Stärke, Dextrine wie Maltodextrin, Polyvinylpyrrolidon, Polyethylenglykol und Alkyl (insbesondere Methyl)-, Carboxymethyl- und Hydroxyethylcellulose.

Gegenstand der vorliegenden Erfindung ist auch ein Verfahren zur Stabilisierung von Spritzpulvern oder Granulaten auf Basis der Wirkstoffe Pyrazophos und Captafol, dadurch gekennzeichnet, daß diesen Magnesiumhydroxidcarbonat zugegeben wird.

Die erfindungsgemäßen Mittel werden in üblicher Weise hergestellt, indem man zunächst den Wirkstoff Captafol mit geeigneten Netz-, Dispergier- und Haftmitteln sowie Inertmaterial unter Zugabe des Stabilisators Magnesiumhydroxidcarbonat in üblicher Weise mischt und diesem Gemisch ein Konzentrat des Wirkstoffs Pyrazophos (hergestellt durch Vermischen von Pyrazophos mit einem Lösungsmittel sowie Inertmaterial) hinzufügt.

Die Granulat-Herstellung erfolgt in üblicher Weise, wobei die pulverförmigen Wirkstoffe mit dem Netz-, Dispergiermittel, dem Stabilisator Magnesiumhydroxidcarbonat und dem Inertmaterial vorgelegt werden und dieses Gemisch mit einer wäßrigen Kleberlösung beispielsweise einer wäßrigen Zucker- oder Polyvinylpyrrolidon-Lösung besprüht wird.

Die erfindungsgemäßen Mittel können auch zusammen mit anderen Pestizidformulierungen appliziert werden.

Die nachfolgenden Beispiele dienen zur Erläuterung der Erfindung.

Allgemeine Angaben für Beispiele 1-5

Spritzpulver auf der Basis der Wirkstoffkombination Pyrazophos und Captafol wurden aus den in den Beispielen angegebenen Komponenten hergestallt und an einer Laborstiftsmühle gemahlen. Es wurden Formulierungen ohne Stabilisator und solche mit dem erfindungsgemäßen Stabilisator Magnesiumhydroxidcarbonat sowie zum Vergleich solche mit anderen basischen Substanzen hergestellt.

Die Bestimmung der Schwebefähigkeit wurde nach der CIPAC-Methode MT 15.1 (s. CIPAC-Handbook Vol. 1 (1970), S. 861) durchgeführt. Zur Herstellung der wäßrigen Spritzpulversuspensionen wurde das Spritzpulver bis zu einer Anwendungskonzentration von 0,8 Gew.-% Gesamtwirkstoff suspendiert.

Beispiel 1

Spritzpulver mit 16,6 Gew.-% Pyrazophos und 33,3 Gew.-% Captafol

27,7 Gew.-% 60 %ige Lösung von Pyrazophos in einem hochsiedenden aromatischen Lösungsmittel = 16,6 Gew.-% Pyrazophos Reinwirkstoff

34,3 Gew.-% Captafol technisch, 97 %ig = 33,3 Gew.-% Reinwirkstoff

2,0 Gew.-% acylgruppenhaltiger Polyvinylalkohol, Verseifungszahl 88 ± 0,8

0-10 Gew.-% Stabilisator

4,0 Gew.-% Netz- und Dispergiermittelgemisch, bestehend aus Methoxyligninsulfonsaurem Natrium und dibutylnaphthalinsulfonsaurem Natrium

20-30 Gew.-% synthetisch gefälltes Siliciumdioxid

In den folgenden Versuchen der Tabelle I wurde die Siliciumdioxidmenge im angegebenen Bereich je nach der eingesetzten Stabilisatormenge einreguliert, so daß die Summe aller Bestandteile 100 Gew.-% ergab.

Ein Spritzpulver der obigen Zusammensetzung mit einem Stabilisator-Gehalt von 3 % Magnesiumhydroxidcarbonat wurde 14 Wochen bei 40 °C gelagert ; danach hatte das Produkt eine gute Schwebefähigkeit, d. h. es trat keine Ausflockung bei anwendungstechnischer Prüfung auf, der pH-Wert war nur unwesentlich abgesunken. Ein entsprechend hergestelltes Spritzpulver ohne diesen Stabilisator-Zusatz flockte bereits nach 1 Woche Lagerung bei 40 °C aus (Tabelle I).

Tabelle I

| Stabilisator | Lagerzeit bei 40°C | Schwebe-fähigkeit | pH-Wert |
|---|---|---|---|
| 3 % Magnesium-hydroxidcarbonat | – 1) | 70 % | 7,3 |
| 3 % Magnesium-hydroxidcarbonat | 14 Wochen | 72 % | 6,9 |
| ohne | – 1) | 70 % | 6,6 |
| ohne | 1 Woche | Ausflockung | 5,6 |

1) = Ausgangswert

Beispiel 2

Ein Spritzpulver der Zusammensetzung gemäß Beispiel 1 wurde mit 3 % Magnesiumhydroxidcarbonat stabilisiert. Zum Vergleich wurden Natriumcarbonat, Natriumbicarbonat, sowie eine molare Mischung von Natriumcarbonat und Natriumbicarbonat in Mengen von 2 % bis 4 % zugesetzt. Die Proben wurde bei 50 °C gelagert und wöchentlich untersucht (s. Tabelle II).

Tabelle II

| Stabilisator | Lagerzeit bei 50 °C | Schwebe-fähigkeit | pH-Wert |
|---|---|---|---|
| 3 % Magnesium-hydroxid-Carbonat | – | 70 % | 7,2 |
| " | 12 Wochen | 78 % | 6,2 |
| 2 % $Na_2CO_3$ | – | 72,7 % | 8,3 |
| " | 5 Wochen | Ausflockung | 5,1 |
| 3 % $Na_2CO_3$ | – | 68 % | 8,8 |
| " | 5 Wochen | Ausflockung | 6,0 |
| 4 % $Na_2CO_3$ | – | 68,3 % | 8,9 |
| " | 5 Wochen | Ausflockung | 6,6 |
| 2 % $NaHCO_3$ | – | 80,5 % | 6,9 |
| " | 4 Wochen | Ausflockung | 5,8 |

Fortsetzung Tabelle II

| Stabilisator | Lagerzeit bei 50°C | Schwebefähigkeit | pH-Wert |
|---|---|---|---|
| 3 % $NaHCO_3$ | - | 74,4 % | 7,0 |
| " | 4 Wochen | Ausflockung | 4,2 |
| 4 % $NaHCO_3$ | - | 68,8 % | 7,0 |
| " | 5 Wochen | Ausflockung | 6,1 |
| 2 % $NaHCO_3$ + $Na_2CO_3$ (molare Mischg.) | - | 71 % | 8,2 |
| " | 2 Wochen | Ausflockung | 6,5 |
| 3 % $NaHCO_3$ + $Na_2CO_3$ (molare Mischg.) | - | 70,5 % | 8,5 |
| " | 2 Wochen | Ausflockung | 7,0 |
| 4 % $NaHCO_3$ + $Na_2CO_3$ (molare Mischg.) | - | 69,7 % | 8,8 |
| " | 4 Wochen | Ausflockung | 7,0 |
| Verwendung von 30 % ©Durosil anstelle von neutralem $SiO_2$ | - | 88,8 % | 7,4 |
| " | 3 Wochen | Ausflockung | 6,1 |

Die Probe mit 3 % Magnesiumhydroxidcarbonat war 12 Wochen bei 50 °C stabil, während bei Zusatz von Natriumcarbonat, Natriumbicarbonat bzw. des Gemisches dieser beiden Substanzen bereits nach 1-5 Wochen Ausflockung eintrat. Auch die Verwendung einer alkalisch eingestellten Kieselsäure ((R)Durosil) führte nicht zum Erfolg.

Beispiel 3

Ein Spritzpulver der Zusammensetzung gemäß Beispiel 1 wurde mit 2 % Magnesiumhydroxidcarbonat als Stabilisator versetzt und 12 Wochen bei 40 °C gelagert. Eine Abnahme der Schwebefähigkeit oder Ausflockung wurde nicht festgestellt. Entsprechende Spritzpulver, denen Magnesiumcarbonat, Trinatriumphosphat oder Natriumperborat zugesetzt worden war, flockten bei der anwendungstechnischen Prüfung nach 7 bis 9 Wochen aus s. nachfolgende Tabelle III.

Tabelle III

| Stabilisator | Lagerzeit bei 40°C | Schwebefähigkeit | pH-Wert |
|---|---|---|---|
| 2 % Magnesiumhydroxidcarbonat | - | 91 % | 7,6 |
| " | 12 Wochen | 93 % | 6,6 |
| 2 % Magnesiumcarbonat | - | 64 % | 7,2 |

(Fortsetzung)

| Stabilisator | Lagerzeit bei 40°C | Schwebefähigkeit | pH-Wert |
|---|---|---|---|
| " | 7 Wochen | Ausflockung | 6,2 |
| 3 % Magnesiumcarbonat | - | 63,3 % | 7,4 |
| " | 8 Wochen | Ausflockung | 6,1 |
| 4 % Magnesiumcarbonat | - | 62,7 % | 7,6 |
| " | 8 Wochen | Ausflockung | 6,3 |
| 2 % $Na_3PO_4$ | - | 69,4 % | 9,1 |
| " | 8 Wochen | Ausflockung | 7,2 |
| 3 % $Na_3PO_4$ | - | 71 % | 9,6 |
| " | 9 Wochen | Ausflockung | 7,0 |
| 2 % $Na_2B_4O_7$ | - | 67,7 % | 7,6 |
| " | 6 Wochen | Ausflockung | 5,8 |
| 3 % $Na_2B_4O_7$ | - | 65,5 % | 7,9 |
| " | 7 Wochen | 51,6 % | 5,9 |

Beispiel 4

Spritzpulver mit 12,5 Gew.-% Pyrazophos und 45,0 Gew.-% Captafol

20,8 Gew.-% 60 %ige Lösung von Pyrazophos in einem hochsiedendem aromatischen Lösungsmittel = 12,5 Gew.-% Pyrazophos Reinwirkstoff
46,4 Gew.-% Captafol 97 %ig = 45,0 Gew.-% Reinwirkstoff
2,0 Gew.-% acylgruppenhaltiger Polyvinylalkohol, Verseifungszahl 88 ± 0,8
3,0 Gew.-% Magnesiumhydroxidcarbonat
5,0 Gew.-% Netz- und Dispergiermittel, bestehend aus Methoxyligninsulfonsaurem Natrium und dibutylnaphthalinsulfonsaures Natrium.
22,8 Gew.-% synthetisch gefälltes Siliciumdioxid

Ein Spritzpulver der angegebenen Zusammensetzung wurde 12 Wochen bei 50 °C gelagert. Bei beiden Temperaturen war das Produkt nach der jeweiligen Lagerzeit in anwendungstechnisch einwandfreiem Zustand :

| | Schwebefähigkeit | pH-Wert |
|---|---|---|
| Ausgangswert | 91,0 % | 7,7 |
| 12 Wochen 40°C | 94,0 % | 6,8 |
| 10 Wochen 50°C | 76,0 % | 6,0 |

Beispiel 5

Ein Spritzpulver einer Zusammensetzung wie in Beispiel 1 angegeben, wurde mit 10 % Magnesiumhydroxidcarbonat stabilisiert und 12 Wochen bei 40 °C und 10 Wochen bei 50 °C gelagert. Bei beiden Temperaturen hatte das Produkt nach der Lagerung eine gute Schwebefähigkeit (90 bzw. 88 %).

Beispiel 6

Ein Spritzgranulat wurde erhalten aus :

18,44 Gew.-% Pyrazophos techn. 90 % = 16,6 % Reinwirkstoff
34,33 Gew.-% Captafol techn. 97 % = 33,3 % Reinwirkstoff
11,23 Gew.-% Ligninsulfonat-Calciumsalz
13,00 Gew.-% Polyvinylpyrrolidon
2,00 Gew.-% Natrium-alkylnaphthalin-sulfat
2,00 Gew.-% Natriumsalz einer ungesättigten Carbonsäure, copolymerisiert mit einem aliphatischen Dien
3,00 Gew.-% Magnesiumhydroxid-carbonat
13,00 Gew.-% synthetisch gefällte Kieselsäure und
3,00 Gew.-% Wasser

Das Spritzgranulat wurde durch Vorlegen der pulverförmigen Wirkstoffe, der Netz- und Dispergiermittel, des Stabilisators und des Inertmaterials und Besprühen des Gemisches mit einer Kleberlösung aus Polyvinylpyrrolidon in Wasser erhalten.

**Patentansprüche**

1. Fungizide Mittel in Form von Spritzpulvern oder Granulaten auf Basis der Wirkstoffe Pyrazophos der Formel I und Captafol der Formel II

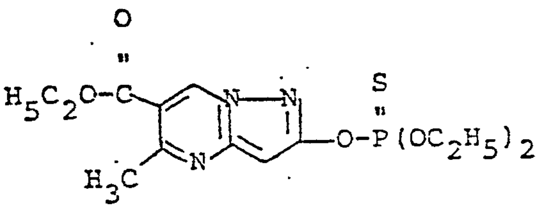

(I)

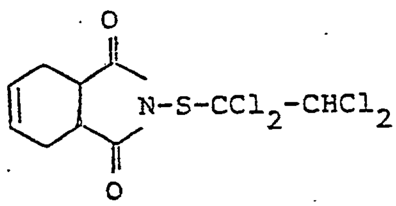

(II)

dadurch gekennzeichnet, daß sie zwecks Stabilisierung Magnesiumhydroxidcarbonat enthalten.

2. Fungizide Mittel gemäß Anspruch 1, dadurch gekennzeichnet, daß sie 2 bis 10 Gew.-% Magnesiumhydroxidcarbonat enthalten.

3. Fungizide Mittel gemäß Ansprüchen 1 bis 2, dadurch gekennzeichnet, daß sie 2 bis 4 Gew.-% Magnesiumhydroxidcarbonat enthalten.

4. Verfahren zur Stabilisierung von fungiziden Mitteln in Form von Spritzpulvern oder Granulaten auf Basis der Wirkstoffe Pyrazophos und Captafol von Anspruch 1, dadurch gekennzeichnet, daß diesen Magnesiumhydroxydcarbonat zugegeben wird.

5. Verfahren zur Stabilisierung von fungiziden Mitteln, gemäß Anspruch 4, dadurch gekennzeichnet, daß 2 bis 10 Gew.-% Magnesiumhydroxidcarbonat zugegeben werden.

6. Verfahren zur Stabilisierung von fungiziden Mitteln gemäß Ansprüchen 4 und 5, dadurch gekennzeichnet, daß 2 bis 4 Gew.-% Magnesiumhydroxidcarbonat zugegeben werden.

7. Verwendung von Magnesiumhydroxidcarbonat zur Stabilisierung von fungiziden Mitteln in Form von Spritzpulvern und Granulaten, welche den Wirkstoff Pyrazophos in Kombination mit Captafol enthalten.

**Claims**

1. Fungicidal compositions in form of wettable powders or granules comprising the active ingredients pyrazophos of formula 1 and captafol of formula 2 characterized in that they contain magnesiumhydroxidecarbonate for stabilization.

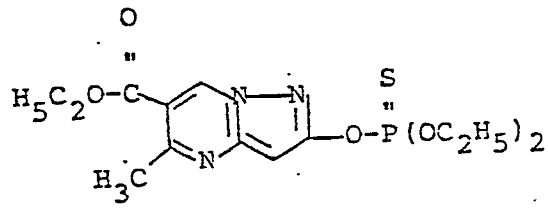

(I)

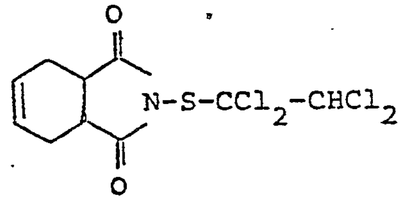

(II)

2. Fungicidal compositions as claimed in claim 1, characterized in that they contain magnesiumhydroxidecarbonate from 2 to 10 weight %.

3. Fungicidal compositions as claimed in claims 1 and 2, characterized in that they contain magnesiumhydroxidecarbonate from 2 to 4 weight %.

4. A process for stabilization of fungicidal compositions in form of wettable powders or granules containing the active ingredients pyrazophos and captafol characterized in that magnesiumhydroxidecarbonate is added.

5. A process for stabilization of fungicidal compositions as claimed in claim 4 characterized in that magnesiumhydroxidecarbonate is added from 2 to 10 weight %.

6. A process for stabilization of fungicidal compositions as claimed in claims 4 and 5, characterized in that magnesiumhydroxidecarbonate is added from 2 to 4 weight %.

7. Use of magnesiumhydroxidecarbonate for stabilization of fungicidal compositions in form of wettable powders and granules, which comprise the active substance pyrazophos in combination with captafol.

**Revendications**

1. Produits fongicides sous la forme de poudres mouillables ou de granulés, à base des matières actives que sont le pyrazophos de formule I et le captafol de formule II :

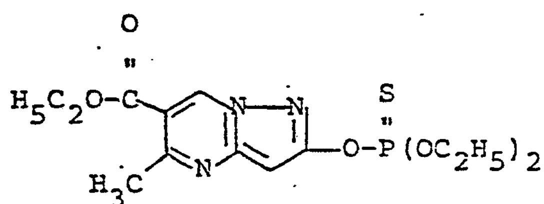

(I)

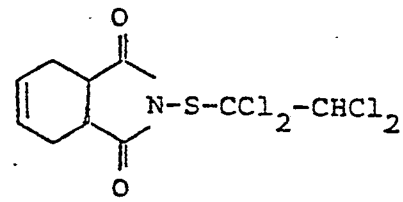

(II)

produits caractérisés en ce qu'ils contiennent du carbonate hydroxyde de magnésium dont le but est de stabiliser.

2. Produits fongicides selon la revendication 1, caractérisés en ce qu'ils contiennent de 2 à 10 % en poids de carbonate hydroxyde de magnésium.

3. Produits fongicides selon l'une des revendications 1 et 2, caractérisés en ce qu'ils contiennent de 2 à 4 % en poids de carbonate hydroxyde de magnésium.

4. Procédé pour stabiliser des produits fongicides sous la forme de poudres mouillables ou de granulés à base de pyrazophos et de captafol selon la revendication 1, procédé caractérisé en ce qu'on ajoute à ces produits du carbonate hydroxyde de magnésium.

5. Procédé pour stabiliser des produits fongicides, selon la revendication 4, caractérisé en ce qu'on ajoute de 2 à 10 % en poids de carbonate hydroxyde de magnésium.

6. Procédé pour stabiliser des produits fongicides selon l'une des revendications 4 et 5, caractérisé en ce qu'on ajoute de 2 à 4 % en poids de carbonate hydroxyde de magnésium.

7. Application du carbonate hydroxyde de magnésium pour stabiliser des produits fongicides sous la forme de poudres mouillables ou de granulés qui contiennent, comme matières actives, à la fois du pyrazophos et du captafol.